# EUROPÄISCHE PATENTSCHRIFT

(11) **EP 2 194 233 B1**
(45) Veröffentlichungstag und Bekanntmachung des Hinweises auf die Patenterteilung: **30.08.2017**
(21) Anmeldenummer: 09177577.5
(22) Anmeldetag: 01.12.2009
(51) Int. Cl.: F01D 9/04, F01D 21/04, F02C 7/04, F02K 3/06

(54) **Strömungsteiler für ein Fantriebwerk**
Flow splitter for a fan engine
Diviseur de flux pour un turboréacteur à double flux

(30) Priorität: 05.12.2008 DE 102008060489
(43) Veröffentlichungstag der Anmeldung: 09.06.2010
(73) Patentinhaber: Rolls-Royce Deutschland Ltd & Co KG, 15827 Blankenfelde-Mahlow (DE)
(72) Erfinder: Lenk, Olaf, 12527 Berlin (DE)
(74) Vertreter: Maikowski & Ninnemann Patentanwälte Partnerschaft mbB

(56) Entgegenhaltungen:
- EP-A1- 2 075 194
- EP-A2- 1 757 796
- EP-A2- 1 942 249
- WO-A2-2009/142793
- US-A- 4 249 859

## Beschreibung

Die Erfindung betrifft einen Strömungsteiler für ein Fantriebwerk und ein Verfahren zum Erhöhen der Betriebssicherheit eines Fantriebwerks mittels eines Strömungsteilers.

Derzeit verwenden nahezu alle zivilen Strahltriebwerke zur Schuberzeugung eine Zweistromtechnik. Dabei durchläuft ein Kernluftstrom im Kerntriebwerk (Verdichter, Brennkammer, Turbine) einen thermodynamischen Prozess, während ein Sekundärluftstrom die Vortriebskraft erzeugt.

Da der Kernluftstrom und der Sekundärluftstrom gemeinsam durch eine Fanstufe in das Strahltriebwerk (Fantriebwerk) gelangen, muss eine Aufteilung erfolgen. Diese Aufteilung wird durch einen Strömungsteiler erzielt, der ein aerodynamisches Profil zur Lufttrennung aufweist.

Ein derartiger Strömungsteiler besteht aus einem zumeist V-förmigen Profil aus einem metallischen Werkstoff, das über Befestigungselemente mit der Triebwerksstruktur verbunden ist. Im Normalbetrieb ist das Profil durch geringe Luftkräfte belastet. Auslegungskriterium ist der Schadensfall, bei dem Fremdkörper in das Fantriebwerk gelangen und auf den Strömungsteiler auftreffen.

Als Material wird für den im Normalfall gering belasteten Strömungsteiler ein metallischer Werkstoff verwendet, der wegen der geforderten Stabilität ein hohes Gewicht aufweist.

Die Auslegung richtet sich dabei nach dem Prinzip, dass bei einem Schadensfall der Strömungsteiler nicht zerstört oder abgetrennt werden darf. Der Hintergrund dafür ist, dass ein abgetrennter Strömungsteiler oder bei der Zerstörung entstehende Bruchstücke die Schaufelkanäle des Kernluftkanals und/oder des Sekundärluftkanals blockieren können, was zu einem Leistungsabfall des Fantriebwerks führt.

Die US 2008/0216300 A1 offenbart ein Verfahren zum Reparieren eines Strömungsteilers. Dabei wird der im Anströmbereich liegende, verschlissene Abschnitt des Strömungsteilers entfernt. Danach wird ein Ersatzring an den verbleibenden Teil des Strömungsteilers geschweißt und nachbearbeitet, so dass er die Form des ursprünglichen Abschnitts im Anströmbereich erhält.

Es handelt sich hierbei um ein aufwendiges Reparaturverfahren, durch das nicht verhindert werden kann, dass sich der Strömungsteiler oder bei Zerstörung entstehende Bruchstücke lösen und den Schaufelkanal blockieren können.

Weitere Strömungsteiler für Fantriebwerke sind beispielsweise in dem nachveröffentlichten Dokument EP 2 075 194 A1 und in den Dokumenten US 4 249 859 A und EP 1 942 249 A2 beschrieben.

Der Erfindung liegt daher die Aufgabe zu Grunde, im Falle einer Zerstörung oder Ablösung des Strömungsteilers eine Blockade des Kernluft- und/oder Sekundärluftkanals zu verhindern.

Diese Aufgabe wird erfindungsgemäß mit einem Strömungsteiler nach Anspruch 1 gelöst. Weiterhin wird die Aufgabe mit einem Verfahren zum Erhöhen der Betriebssicherheit mittels eines Strömungsteilers nach Anspruch 8 gelöst. Vorteilhafte Ausgestaltungen der Erfindung sind in den Unteransprüchen enthalten.

Erfindungsgemäß besteht die Lösung der Aufgabe in einem Strömungsteiler für ein Fantriebwerk, der gleichzeitig am äußeren Umfang eines ringförmigen Kernluftkanals und am Inneren Umfang eines ringförmigen Sekundärluftkanals eine ringförmige Eintrittskante bildet, in den Fanluftstrom hineinragt und ein aerodynamisches Profil aufweist. Der Strömungsteiler weist abtrennbare Teile auf, die in jeder Ausrichtung durch die Schaufelkanäle des Kernluftkanals und des Sekundärluftkanals passen. Der Strömungsteiler weist Sollbruchstellen auf, die die abtrennbaren Teile begrenzen und durch die die Größe der abtrennbaren Teile festgelegt ist. Auf diese Weise wird die Maximalgröße der abtrennbaren Teile des Strömungsteilers kontrolliert. Die Anzahl und Position der Sollbruchstellen wird den Anforderungen an die Maximalgröße der abtrennbaren Teile angepasst. Dabei kann die Dicke der Sollbruchstellen variieren.

Um eine Blockade des Kernluftkanals und/oder des Sekundärluftkanals im Schadensfall (Zerstörung und/oder Ablösung des Strömungsteilers) zu verhindern, dürfen die abgetrennten Teile des Strömungsteilers nicht im Gitter der Austrittsleitschaufeln des Sekundärluftkanals bzw. im Gitter der Eintrittsleitschaufeln des Kernluftkanals hängen bleiben.

Basierend auf der Anzahl der Leitschaufeln, deren Dimensionierung und aerodynamischen Profilierung ergibt sich eine Maximalgröße für die vom Strömungsteiler abtrennbaren Teile, die mit der Triebwerksströmung durch die Schaufelgitter des Fantriebwerks geleitet werden sollen. Die abtrennbaren Teile des Strömungsteilers sind also dermaßen dimensioniert, dass sie diese Maximalgröße nicht überschreiten, sondern in jeder Ausrichtung durch die Schaufelkanäle des Kernluftkanals und des Sekundärluftkanals passen.

Dadurch ist der sichere Betrieb des Fantriebwerks auch in Schadensfällen gewährleistet. Dies erlaubt den Einbau gross segmentierter Strömungsteiler, was den Fertigungs-, Montage- und Logistikaufwand verringert.

Vorzugsweise sind die Sollbruchstellen an der Oberfläche des Strömungsteilers angeordnet. Eine derartige Gestaltung der Sollbruchstellen ist besonders einfach herzustellen.

Die Sollbruchstellen können im Wesentlichen entlang der Strömungsrichtung angeordnet sein. Diese Anordnung der Sollbruchstellen bewirkt, dass die abtrennbaren Teile jeweils Kreisringsegmente bilden und der verbleibende Rest des Strömungsteilers seine Form behält.

Alternativ können die Sollbruchstellen im Wesentlichen in einem Winkel zur Strömungsrichtung angeordnet sein. Durch diese Anordnung können die Formen der abgetrennten Teile und des verbleibenden Rests des Strömungsteilers variiert werden.

In einer bevorzugten Ausführungsform weist der Strömungsteiler einen im Wesentlichen V-förmigen Querschnitt auf, und die Sollbruchstellen sind im Innern des V-förmigen Querschnitts angeordnet. Diese Form ist einfach und kostengünstig herzustellen uns weist ein geringes Gewicht auf. Die Anordnung der Sollbruchstellen an der inneren Oberfläche des V-förmigen Querschnitts verhindert eine Störung des Kernluftstroms und des Sekundärluftstroms an der äußeren Oberfläche des Strömungsteilers.

Vorzugsweise ist der Strömungsteiler aus einem Faserverbundmaterial oder aus einem Kunststoff gebildet. Diese Werkstoffe weisen ein geringes Gewicht auf und sind kostengünstig herzustellen.

Weiterhin besteht die Lösung der Aufgabe in einem Verfahren zum Erhöhen der Betriebssicherheit eines Fantriebwerks mittels eines Strömungsteilers. Bei einem Eintritt mindestens eines Fremdkörpers in das Fantriebwerk und einem Auftreffen des Fremdkörpers auf den Strömungsteiler wird mindestens ein definierter abtrennbarer Teil des Strömungsteilers abgetrennt.

Mit Hilfe dieses Verfahrens wird auch in Schadensfällen, wenn der Strömungsteiler beschädigt wird, der sichere Betrieb des Fantriebwerks gewährleistet, denn die abgetrennten Teile passen durch die Schaufelkanäle und blockieren die Schaufelgitter nicht. Ein vollständiges Ablösen des Strömungsteilers durch extreme Kräfte, die von auftreffenden Fremdkörpern erzeugt werden können, findet nicht statt, da der Strömungsteiler durch das Auftreffen der Fremdkörper im schlimmsten Fall in eine Vielzahl von einzelnen Teilen zerlegt wird.

Vorzugsweise wird der abtrennbare Teil des Strömungsteilers an den Sollbruchstellen vom Strömungsteiler abgetrennt und bildet einen abgetrennten Teil. Dadurch wird das Abtrennen von Teilen in der erforderlichen Maximalgröße erreicht.

Insbesondere wird der mindestens eine abgetrennte Teil des Strömungsteilers mittels Strömungsenergie durch die Schaufelkanäle des Kernluftkanals und/oder des Sekundärluftkanals geführt. Dies verhindert, dass einzelne abgetrennte Teile die Strömungen im Fantriebwerk stören und/oder die Rotation der Laufschaufeln behindern.

Im Folgenden werden der Stand der Technik und ein Ausführungsbeispiel der Erfindung anhand von fünf Figuren näher erläutert. Es zeigen:
- Fig. 1a: eine perspektivische Ansicht eines Abschnitts eines Strömungsteilers nach dem Stand der Technik von innen,
- Fig. 1b: eine perspektivische Ansicht des Abschnitts des Strömungsteilers gemäß Fig. 1a von außen,
- Fig. 2a: eine perspektivische Ansicht eines Abschnitts eines erfindungsgemäßen Strömungsteilers von innen,
- Fig. 2b: eine vergrößerte Detailansicht des Abschnitts des erfindungsgemäßen Strömungsteilers in Fig. 2a und
- Fig. 2c: eine perspektivische Ansicht des Abschnitts des erfindungsgemäßen Strömungsteilers in Fig. 2a von außen.

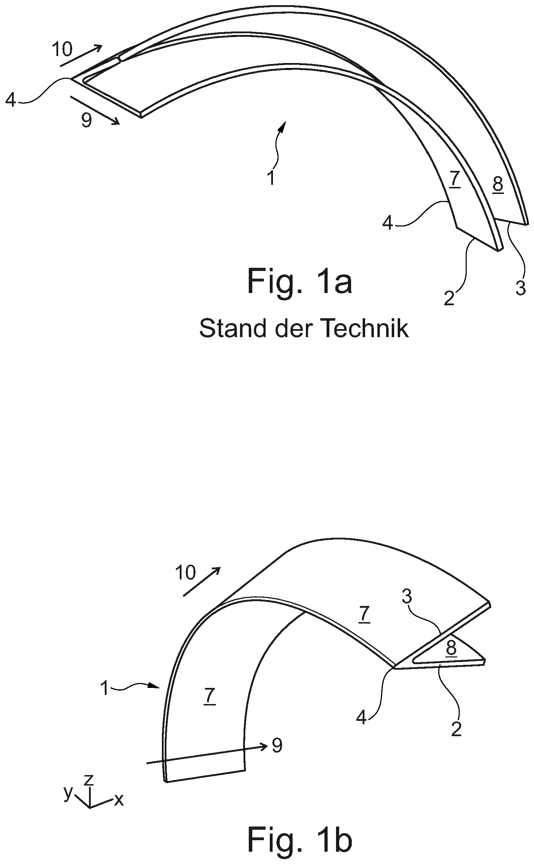

Die Fig. 1a und 1b zeigen einen Abschnitt eines Strömungsteilers 1 nach dem Stand der Technik. Der Strömungsteiler 1 weist eine Kernluftflanke 2, eine Sekundärluftflanke 3 und eine Eintrittskante 4 auf. Weiterhin sind ein Kernluftstrom 9 und ein Sekundärluftstrom 10 dargestellt.

Der Strömungsteiler 1 gemäß den Fig. 1a und 1b ist ringförmig aufgebaut und weist einen V-förmigen Querschnitt auf, wobei der V-förmige Querschnitt von der Kernluftflanke 2 und der Sekundärluftflanke 3 gebildet wird. Die Kernluftflanke 2 und die Sekundärluftflanke 3 stoßen an der Spitze des V-förmigen Querschnitts aneinander und bilden die Eintrittskante 4. Der Strömungsteiler 1 weist an seinem V-förmigen Querschnitt eine äußere Oberfläche 7 und eine innere Oberfläche 8 auf.

Im Betrieb teilt der Strömungsteiler 1 an der Eintrittskante 4 einen nicht dargestellten eintretenden ringförmigen Luftstrom in den Kernluftstrom 9 und den Sekundärluftstrom 10 auf. Auch der Kernluftstrom 9 und der Sekundärluftstrom 10 sind ringförmig. Der Kernluftstrom 9 strömt an der Kernluftflanke 2 entlang, während der Sekundärluftstrom 10 an der Sekundärluftflanke 3 entlang strömt. Danach treten der Kernluftstrom 9 in den nicht dargestellten Kernluftkanal und der Sekundärluftstrom 10 in den ebenfalls nicht dargestellten Sekundärluftkanal des Fantriebwerks ein.

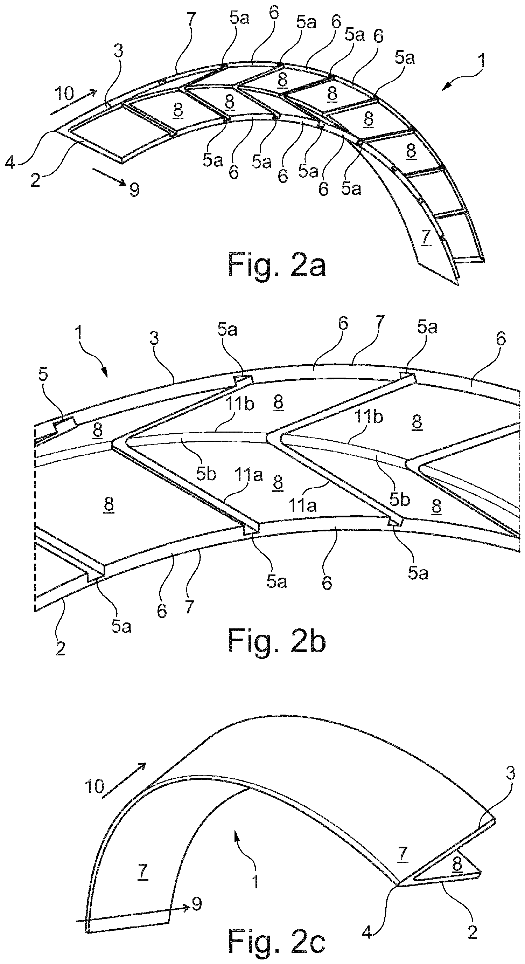

Die Fig. 2a, 2b und 2c zeigen einen Abschnitt eines erfindungsgemäßen Strömungsteilers 1. Der Strömungsteiler 1 ist mit einer Kernluftflanke 2 und einer Sekundärluftflanke 3 versehen.

Gemäß den Fig. 2a und 2b weist der Strömungsteiler 1 weiterhin erste Nuten 11a und zweite Nuten 11b, erste Sollbruchstellen 5a und zweite Sollbruchstellen 5b sowie abtrennbare Teile 6 auf.

In den Fig. 2a und 2c ist auch eine Eintrittskante 4 dargestellt. Weiterhin sind dort ein Kernluftstrom 9 und ein Sekundärluftstrom 10 dargestellt.

Der Strömungsteiler 1 gemäß den Fig. 2a, 2b und 2c ist ringförmig aufgebaut und weist einen im Wesentlichen V-förmigen Querschnitt auf, wobei dieser Querschnitt von der Kernluftflanke 2 und der Sekundärluftflanke 3 gebildet wird. Die Kernluftflanke 2 und die Sekundärluftflanke 3 stoßen an der Spitze des V-förmigen Querschnitts aneinander und bilden die Eintrittskante 4 (vgl. Fig. 2a und 2c).

Der Strömungsteiler 1 weist eine glatte äußere Oberfläche 7 (vgl. Fig. 2c) und eine unterteilte innere Oberfläche 8 auf (vgl. Fig. 2a und 2b). An der inneren Oberfläche 8 sind die in Richtung der Kernluftströmung 9 und der Sekundärluftströmung 10 in gleichmäßigen Abständen angeordneten, parallel verlaufenden ersten Nuten 11a dargestellt. Durch diese ersten Nuten 11a entstehen an der Kernluftflanke 2 und der Sekundärluftflanke 3 die ersten Sollbruchstellen 5a im Strömungsteiler 1. Die zweiten Nuten 11b verlaufen an der inneren Oberfläche 8 in Umfangsrichtung entlang der Verbindungsstelle zwischen der Kernluftflanke 2 und der Sekundärluftflanke 3, so dass an der Eintrittskante 4 die zweiten Sollbruchstellen 5b entstehen. Die ersten Nuten 11a und die zweiten Nuten 11b bzw. die ersten Sollbruchstellen 5a und die zweiten Sollbruchstellen 5b begrenzen die abtrennbaren Teile 6.

Im Betrieb teilt der Strömungsteiler 1 an der Eintrittskante 4 einen nicht dargestellten eintretenden ringförmigen Luftstrom in den Kernluftstrom 9 und den Sekundärluftstrom 10 auf. Auch der Kernluftstrom 9 und der Sekundärluftstrom 10 sind ringförmig. Der Kernluftstrom 9 strömt an der Kernluftflanke 2 entlang, während der Sekundärluftstrom 10 an der Sekundärluftflanke 3 entlang strömt. Danach treten der Kernluftstrom 9 in den nicht dargestellten Kernluftkanal und der Sekundärluftstrom 10 in den ebenfalls nicht dargestellten Sekundärluftkanal des Fantriebwerks ein.

Mit dem eintretenden ringförmigen Luftstrom treten oft Fremdkörper in das nicht dargestellte Fantriebwerk ein und treffen auf den Strömungsteiler 1 auf. Dabei kann der Strömungsteiler 1 beschädigt werden, wobei nach dem Stand der Technik verschieden große Bruchstücke entstehen, die die Schaufelgitter des nicht dargestellten Kern- und Sekundärluftkanals blockieren können.

Bei dem erfindungsgemäßen Strömungsteiler 1 gemäß den Fig. 2a bis 2c werden dagegen immer nur die abtrennbaren Teile 6 mit der durch die ersten und zweiten Sollbruchstellen 5a und 5b definierten Größe vom Strömungsteiler 1 abgetrennt. Die abgetrennten Teile werden mit dem Kernluftstrom 9 und/oder dem Sekundärluftstrom 10 durch das nicht dargestellte Fantriebwerk transportiert. Die Größe der abgetrennten Teile ist dabei so bemessen, dass diese durch die nicht dargestellten Schaufelkanäle des ebenfalls nicht dargestellten Kern- und Sekundärluftkanals passen.

Die glatte äußere Oberfläche 7 des Strömungsteilers 1 ermöglicht eine Beibehaltung der Kontinuität der äußeren Profilschicht des Strömungsteilers 1, so dass die aerodynamische Qualität des Strömungsteilers 1 nicht beeinträchtigt wird.

### Bezugszeichenliste

- 1: Strömungsteiler
- 2: Kernluftflanke
- 3: Sekundärluftflanke
- 4: Eintrittskante
- 5a: Erste Sollbruchstelle
- 5b: Zweite Sollbruchstelle
- 6: Abtrennbarer Teil
- 7: Äußere Oberfläche
- 8: Innere Oberfläche
- 9: Kernluftstrom
- 10: Sekundärluftstrom
- 11a: Erste Nut
- 11b: Zweite Nut

## Patentansprüche

1. Strömungsteiler (1) für ein Fantriebwerk, der gleichzeitig am äußeren Umfang eines ringförmigen Kernluftkanals und am inneren Umfang eines ringförmigen Sekundärluftkanals eine ringförmige Eintrittskante (4) bildet, in den Fanluftstrom hineinragt und ein aerodynamisches Profil aufweist, **dadurch gekennzeichnet, dass** der Strömungsteiler abtrennbare Teile (6) aufweist, die in jeder Ausrichtung durch die Schaufelkanäle des Kernluftkanals und des Sekundärluftkanals passen, wobei der Strömungsteiler Sollbruchstellen (5a, 5b) aufweist, die die abtrennbaren Teile (6) begrenzen und durch die die Größe der abtrennbaren Teile (6) festgelegt ist.

2. Strömungsteiler (1) nach Anspruch 1, **dadurch gekennzeichnet, dass** die Sollbruchstellen (5a, 5b) an der Oberfläche (7, 8) des Strömungsteilers (1) angeordnet sind.

3. Strömungsteiler (1) nach einem der Ansprüche 1 und 2, **dadurch gekennzeichnet, dass** die Sollbruchstellen (5a, 5b) im Wesentlichen entlang der Strömungsrichtung (9, 10) angeordnet sind.

4. Strömungsteiler (1) nach einem der Ansprüche 1 und 2, **dadurch gekennzeichnet, dass** die Sollbruchstellen (5a, 5b) im Wesentlichen in einem Winkel zur Strömungsrichtung (9, 10) angeordnet sind.

5. Strömungsteiler (1) nach einem der Ansprüche 1 bis 4, **dadurch gekennzeichnet, dass** der Strömungsteiler (1) einen im Wesentlichen V-förmigen Querschnitt aufweist und die Sollbruchstellen (5a, 5b) an der inneren Oberfläche (8) des V-förmigen Querschnitts angeordnet sind.

6. Strömungsteiler (1) nach einem der Ansprüche 1 bis 5, **dadurch gekennzeichnet, dass** der Strömungsteiler (1) aus einem Faserverbundmaterial gebildet ist.

7. Strömungsteiler (1) nach einem der Ansprüche 1 bis 5, **dadurch gekennzeichnet, dass** der Strömungsteiler (1) aus einem Kunststoff gebildet ist.

8. Verfahren zum Erhöhen der Betriebssicherheit eines Fantriebwerks mittels eines Strömungsteilers (1) nach den Ansprüchen 1 bis 7, **dadurch gekennzeichnet, dass** bei einem Eintritt mindestens eines Fremdkörpers in das Fantriebwerk und einem Auftreffen des Fremdkörpers auf den Strömungsteiler (1) mindestens ein definierter abtrennbarer Teil (6) des Strömungsteilers (1) an den Sollbruchstellen (5a, 5b) vom Strömungsteiler (1) abgetrennt wird und einen abgetrennten Teil bildet.

9. Verfahren nach Anspruch 8, **dadurch gekennzeichnet, dass** der mindestens eine abgetrennte Teil des Strömungsteilers (1) mittels Strömungsenergie durch die Schaufelkanäle des Kernluftkanals und/oder des Sekundärluftkanals geführt wird.

## Claims

1. Flow divider (1) for a fan engine which forms an annular leading edge (4) simultaneously on the outer circumference of an annular core air duct and the inner circumference of an annular secondary air duct, protrudes into the fan airflow and has an aerodynamic profile, **characterized in that** the flow divider features separable parts (6) which, whatever their orientation, are capable of passing the vane passages of the core air duct and the secondary air duct, where the flow divider is provided with predetermined breaking points (5a, 5b) by which the separable parts (6) are delimited and the size of the separable parts (6) is defined.

2. Flow divider (1) in accordance with Claim 1, **characterized in that** the predetermined breaking points (5a, 5b) are arranged on the surface (7, 8) of the flow divider (1).

3. Flow divider (1) in accordance with one of the Claims 1 and 2, **characterized in that** the predetermined breaking points (5a, 5b) are arranged essentially along the flow direction (9, 10).

4. Flow divider (1) in accordance with one of the Claims 1 and 2, **characterized in that** the predetermined breaking points (5a, 5b) are arranged essentially at an angle to the flow direction (9, 10).

5. Flow divider (1) in accordance with one of the Claims 1 to 4, **characterized in that** the flow divider (1) has an essentially V-shaped cross-section, and the predetermined breaking points (5a, 5b) are arranged on the inner surface (8) of the V-shaped cross-section.

6. Flow divider (1) in accordance with one of the Claims 1 to 5, **characterized in that** the flow divider (1) is made of a fiber-composite material.

7. Flow divider (1) in accordance with one of the Claims 1 to 5, **characterized in that** the flow divider (1) is made of a plastic material.

8. Method for increasing the operational safety of a fan engine by means of a flow divider (1) in accordance with the Claims 1 to 7, **characterized in that** upon entry of at least one foreign object into the fan engine and impingement of the foreign object on the flow divider (1), at least one defined, separable part (6) of the flow divider (1) is separated from the flow divider (1) at the predetermined breaking points (5a, 5b) and forms a separated part.

9. Method in accordance with Claim 8, **characterized in that** the at least one separated part of the flow divider (1) is passed by aerodynamic energy through the vane passages of the core air duct and/ or the secondary air duct.

## Revendications

1. Répartiteur de flux (1) pour un turboréacteur à double flux qui forme, simultanément à la circonférence extérieure d'une veine annulaire d'air primaire et à la circonférence intérieure d'une veine annulaire d'air secondaire, un bord d'attaque (4) annulaire, et qui plonge dans le flux d'air de la soufflante en présentant un profil aérodynamique, **caractérisé en ce que** ledit répartiteur de flux dispose de parties détachables (6) qui peuvent passer, quelque soit leur orientation, à travers les canaux d'aubes de la veine d'air primaire ainsi que de la veine d'air secondaire, sachant que le répartiteur de flux est doté de points de rupture imposés (5a, 5b) délimitant les parties détachables (6) et définissant la dimension desdites parties détachables (6).

2. Répartiteur de flux (1) selon la revendication n° 1, **caractérisé en ce que** les points de rupture imposés (5a, 5b) sont disposés à la surface (7, 8) du répartiteur de flux (1).

3. Répartiteur de flux (1) selon une des revendications n° 1 et n° 2, **caractérisé en ce que** les points de rupture imposés (5a, 5b) sont disposés pour l'essentiel le long du sens d'écoulement (9, 10).

4. Répartiteur de flux (1) selon une des revendications n° 1 et n° 2, **caractérisé en ce que** les points de rupture imposés (5a, 5b) sont disposés pour l'essentiel en formant un angle avec le sens d'écoulement (9, 10).

5. Répartiteur de flux (1) selon une des revendications n° 1 à n° 4, **caractérisé en ce que** le répartiteur de flux (1) présente pour l'essentiel une section transversale en forme de V et que les points de rupture imposés (5a, 5b) sont disposés sur la face intérieure de la section transversale en forme de V.

6. Répartiteur de flux (1) selon une des revendications n° 1 à n° 5, **caractérisé en ce que** le répartiteur de flux (1) est formé d'un matériau composite en fibres.

7. Répartiteur de flux (1) selon une des revendications n° 1 à n° 5, **caractérisé en ce que** le répartiteur de flux (1) est formé d'un matériau synthétique.

8. Procédé pour augmenter la sécurité opérationnelle d'un turboréacteur à double flux au moyen d'un répartiteur de flux (1) selon les revendications n° 1 à n° 7, **caractérisé en ce que** lors d'une entrée d'au moins un corps étranger dans ledit turboréacteur à double flux et d'un impact de ce corps étranger sur ledit répartiteur de flux (1), au moins une partie détachable définie (6) dudit répartiteur de flux (1) se détache aux points de rupture imposés (5a, 5b) dudit répartiteur de flux (1) et forme une partie détachée.

9. Procédé selon la revendication n° 8, **caractérisé en ce que** la au moins une partie détachée du répartiteur de flux (1) est guidée par l'énergie aérodynamique à travers les canaux d'aubes de la veine d'air primaire et/ ou de la veine d'air secondaire.
